(19) Europäisches Patentamt
European Patent Office
Office européen des brevets

(11) Veröffentlichungsnummer: **0 316 649 B1**

(12) # EUROPÄISCHE PATENTSCHRIFT

(45) Veröffentlichungstag der Patentschrift: **22.07.92**

(51) Int. Cl.5: **C09B 33/12**, D06P 1/18

(21) Anmeldenummer: **88118181.2**

(22) Anmeldetag: **02.11.88**

(54) **Wasserunlösliche Azofarbmittel, ihre Herstellung und Verwendung.**

(30) Priorität: **13.11.87 DE 3738542**

(43) Veröffentlichungstag der Anmeldung: **24.05.89 Patentblatt 89/21**

(45) Bekanntmachung des Hinweises auf die Patenterteilung: **22.07.92 Patentblatt 92/30**

(84) Benannte Vertragsstaaten: **CH DE FR GB IT LI**

(56) Entgegenhaltungen: **US-A- 2 115 030**

(73) Patentinhaber: **HOECHST AKTIENGESELLSCHAFT**
**Postfach 80 03 20**
**W-6230 Frankfurt am Main 80(DE)**

(72) Erfinder: **Jung, Rüdiger, Dr.**
**Altkönigstrasse 1**
**W-6233 Kelkheim (Taunus)(DE)**
Erfinder: **Deubel, Reinhold, Dr.**
**Geierfeld 64**
**W-6232 Bad Soden am Taunus(DE)**

**EP 0 316 649 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft das technische Gebiet der Azofarbmittel mit mindestens zwei Azogruppen.

Gegenstand der Erfindung sind Verbindungen der idealisierten allgemeinen Formel (I),

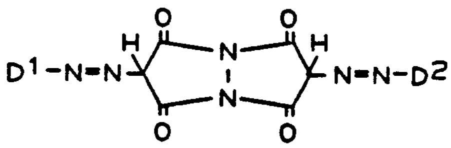

(I)

worin $D^1$ und $D^2$ unabhängig voneinander jeweils einen unsubstituierten oder substituierten Arylrest oder Heteroarylrest, bedeuten, wobei jeweils die Substituenten die Bedeutung von $A^1$ oder $A^2$ haben und

$A^1$ für einen Rest aus der Gruppe gesättigtes oder ungesättigtes, geradkettiges oder verzweigtes $C_1$-$C_{24}$-Alkyl, $C_1$-$C_{24}$-Alkoxy, $C_1$-$C_{24}$-Hydroxyalkyl, $C_5$-$C_{10}$-Cycloalkyl, $C_1$-$C_{24}$-Alkoxy-carbonyl, $C_2$-$C_{25}$-Alkanoyloxy, $C_2$-$C_{25}$-Alkanoylamino, $C_1$-$C_{24}$-Alkylsulfonyl, Carbamoyl, N-($C_1$-$C_{12}$-Alkyl)-aminocarbonyl, N,N-Di-($C_1$-$C_{12}$-Alkyl)-aminocarbonyl, $C_1$-$C_{12}$-Alkylamino, N,N-Di-($C_1$-$C_{12}$-Alkyl)-amino, Sulfamoyl, N-($C_1$-$C_{12}$-Alkyl)-aminosulfonyl, N,N-Di-($C_1$-$C_{12}$-Alkyl)-aminosulfonyl, Halogen, wie Fluor, Chlor und Brom, Nitro, Cyano, Trifluormethyl, Carboxy, Sulfo, $C_1$-$C_{12}$-Alkylthio, $C_2$-$C_{25}$-Alkanoyl und Hydroxy steht und

$A^2$ für einen Rest der Formel Ar-W- steht, in der W eine direkte Bindung oder eine divalente Gruppe der Formel -S-, -O-, -CO-, -CO-O-, -O-CO-, -CO-NH-, -NH-CO-, -SO-, $-SO_2-$, $-SO_2NH-$, $-NHSO_2-$, $-CH_2-$, $-CH(CH_3)-$, $C(CH_3)_2-$,-NR'-, in der R' Wasserstoff oder $C_1$-$C_6$-Alkyl bedeutet, oder -N=N- oder eine Kombination aus mindestens zwei der vorstehenden divalenten Gruppen ist und

Ar den Rest eines carbocyclischen oder heterocyclischen aromatischen Systems mit ein oder zwei Ringen, insbesondere Phenyl, Naphthyl oder Phenyl, an das ein heterocyclischer 5- oder 6-gliedriger Ring mit 1-3 Heteroatomen, insbesondere Stickstoff, Schwefel oder Sauerstoff als Heteroatom ankondensiert ist, oder einen der vorstehenden Reste Ar, der zusätzlich 1-3 der vorstehend definierten Substituenten $A^1$ aufweist, bedeutet.

Bevorzugt sind Verbindungen der Formel (I), worin

$D^1$ und $D^2$ unabhängig voneinander jeweils einen Rest einer aromatischen Verbindung aus der Benzol-, Naphthalin-, Fluoren- oder Anthrachinon-Reihe oder aus der heterocyclischen Reihe bedeuten.

Bevorzugt sind Verbindungen der Formel (I), in der $D^1$ und $D^2$ unabhängig voneinander jeweils einen Arylrest oder Heteroarylrest aus der folgenden Gruppe bedeuten:

Phenyl, Phenyl mit 1-3 Substituenten, Naphthyl, Naphthyl mit 1-4 Substituenten, ein Rest eines Anthrachinons oder Fluorens mit bis zu 4, vorzugsweise 1-3 Substituenten, und ein Rest eines heterocyclischen Systems mit 1 bis 5, insbesondere mit 2, fünf- oder sechs-gliedrigen Ringen, das bis zu 4 Substituenten aufweisen kann, wie Benzimidazol, Benzimidazol-2-on, Phthalsäureimid, Chinazolin, Carbazol, Benzothiazol, Chinazolin-4-on, Chinazolin-2,4-dion, Indol, Isoindol, Chinolin, Isochinolin, Chinoxalin, Chinoxalin-2,3-dion, Indazol, Chinolin-2-on, Benzimidazo[1,2-a]pyrimid-2-on, Benzthiazol-2-on, Benzo[e][1,3]oxazin-2,4-dion, Benzo[e][1,4]oxazin-3-on, Benzotriazol, Benzoxazol-2-on, Benzimidazol-2-thion, Benzo[cd]indol-2-on, Benzo[de]isochinolin-1,3-dion (Naphthalimid), 1,2,4-Thiadiazol, 1,3,4-Thiadiazol, Thiazol, Isothiazol, Thiophen, Dibenzo[a,c]phenazin, Cinnolin und Phthalazin, das jeweils 1-3 Substituenten aufweisen kann, wobei die Substituenten der substituierten Arylreste oder Heteroarylreste jeweils die Bedeutung von $A^1$ oder $A^2$ haben.

Von den genannten heterocyclischen Systemen, die für $D^1$ oder $D^2$ in Frage kommen, sind besonders folgende geeignet:

Benzthiazol, Benzimidazol, Benzimidazol-2-on, Chinolin-2-on, Chinazolin-2,4-dion, Carbazol, Benzoxazol-2-on, Phthalimid, Chinoxalin-2,3-dion, Phthalazin-1,4-dion.

$A^1$ steht vorzugsweise für einen Rest aus der Gruppe $C_1$-$C_4$-Alkyl, wie Methyl, Ethyl, Propyl, Isopropyl, Butyl, Isobutyl, 2-Butyl und 2-Methyl-prop-2-yl, insbesondere Methyl und Ethyl, $C_1$-$C_4$-Alkoxy, wie Methoxy, Ethoxy, Propoxy, Isopropoxy, Butoxy, Isobutoxy, 2-Butoxy und tert-Butoxy, insbesondere Methoxy und Ethoxy, $C_1$-$C_4$-Alkoxycarbonyl, $C_2$-$C_5$-Alkanoyloxy, $C_2$-$C_5$-Alkanoylamino, Carbamoyl, N-($C_1$-$C_4$-Alkyl)-aminocarbonyl, N,N-Di-($C_1$-$C_4$-Alkyl)-aminocarbonyl, Sulfamoyl, N-($C_1$-$C_4$-Alkyl)- und N,N-Di-($C_1$-$C_4$-Alkyl)-aminosulfonyl, Chlor, Brom, Nitro, Trifluormethyl, Ethylsulfonyl, Carboxy, Sulfo und Cyano.

$A^2$ steht vorzugsweise für einen Rest der Formel Ar-W-, in der W eine divalente Gruppe der Formel -O-, -CO-O-, -O-CO-, -CO-NH-, -NH-CO-, $-SO_2-$, $-SO_2NH-$, $-NHSO_2-$, $-CH_2-$, -NH- oder -N=N- oder eine Kombination aus zwei der genannten divalenten Gruppen ist und

Ar Phenyl, Naphthyl oder Phenyl mit einem ankondensierten fünf- oder sechs-gliedrigen heterocyclischen

Ring mit ein oder zwei Heteroatomen, insbesondere Stickstoffatome oder Stickstoff- und Schwefelatome, oder einen der vorstehenden Reste Ar, der zusätzlich 1 bis 3 Substituenten $A^1$ der oben definierten Bedeutung aufweist, bedeutet.

Bevorzugt sind erfindungsgemäße Verbindungen der Formel (I), in denen $D^1$ und $D^2$ die gleiche Bedeutung haben.

Die allgemeine Formel (I) ist als idealisierte Formel zu verstehen und umfaßt auch die entsprechenden tautomeren Verbindungen sowie die möglichen Konfigurationsisomere jeder tautomeren Form. In diesem Zusammenhang sei erwähnt, daß Verbindungen mit Carbonylgruppen in $\alpha$-Stellung zum arylazo-substituierten Kohlenstoffatom normalerweise in der Hydrazoform vorliegen. Die idealisierte Formel (I) umfaßt deshalb vor allem auch die Bishydrazonform.

Gegenstand der Erfindung ist auch das Verfahren zur Herstellung der erfindungsgemäßen Verbindungen der idealisierten allgemeinen Formel (I), dadurch gekennzeichnet, daß man ein oder mehrere Amine der Formel $D\text{-}NH_2$, worin D die Bedeutung von $D^1$ oder $D^2$ entsprechend Formel (I) hat, diazotiert und mit 0,5 Mol 1,5-Diazabicyclo[3.3.0]octan-2,4,6,8-tetron pro Mol insgesamt reagierender Diazoniumsalze kuppelt.

Als Diazokomponenten $D\text{-}NH_2$ kommen diazotierbare aromatische Amine in Betracht, insbesondere Aniline, Naphthylamine, Aminofluorene, Aminoanthrachinone und heterocyclische aromatische Amine, wobei die diazotierbaren Amine jeweils ein- oder mehrfach substituiert sein können. Insbesondere sind aromatische Amine $D\text{-}NH_2$ geeignet, in denen D die für $D^1$ und $D^2$ bevorzugt genannten Arylreste bedeutet.

Geeignete aromatische Amine $D\text{-}NH_2$ sind beispielsweise Anilin und substituierte Aniline, vorzugsweise Anilin mit 1-3 Substituenten aus der Gruppe Methyl, Ethyl, Methoxy, Ethoxy, Carboxy, Carbomethoxy, Carboethoxy, Carbopropoxy, Carboisopropoxy, Carbobutoxy, Acetoxy, Carbamoyl, Acetamido, N-Methylaminocarbonyl, N-Ethylaminocarbonyl, Sulfo, Phenylaminocarbonyl, Mono- und Dichlorphenylaminocarbonyl, insbesondere 2,5-Dichlorphenylaminocarbonyl, 2-, 3- und 4-Carbamoylphenyl-aminocarbonyl, Sulfamoyl, N-Methylaminosulfonyl, N-Methylaminosulfonyl, N,N-Dimethylaminosulfonyl, N,N-Diethylaminosulfonyl, N-Phenylsulfonyl, Phenylazo, 2-, 3- und 4-Methylphenylazo, Dimethylphenylazo, Phenoxy, 2-Chlorphenoxyethylsulfonyl, Benzoylamino, N-Methylsulfonylamino, N,N-Dimethylsulfonylamino, N,N-Diethylsulfonylamino, 2-, 3-und 4-Nitrophenylazo, 2,6-Dichlor-4-nitrophenylazo, 2-Chlor-4-nitrophenylazo, 3-Methylphenylazo, Benzylsulfonyl, Cyano, Chlor, Nitro und Trifluormethyl.

Geeignete substituierte Aniline sind beispielsweise 2-, 3- und 4-Nitroanilin, -Chloranilin, -Methylanilin, -Trifluormethylanilin oder -Methoxyanilin, 2,3-, 2,4-, 2,5-, 2,6-, 3,4- und 3,5-Dinitroanilin oder -Dichloranilin, 4-Chlor-2-nitroanilin, 4-Methyl-2-nitroanilin, 4-Methoxy-2-nitroanilin, 5-Chlor-2-nitroanilin, 5-Methyl-2-nitroanilin, 5-Methoxy-2-nitroanilin, 2-Chlor-4-nitroanilin, 2-Methyl-4-nitroanilin, 2-Methoxy-4-nitroanilin, 2-Chlor-5-nitroanilin, 2-Methyl-5-nitroanilin, 2-Methoxy-5-nitroanilin, 2-Chlor-4-methylanilin, 2-Chlor-4-methoxyanilin, 2-Chlor-5-methylanilin, 2-Chlor-5-methoxyanilin, 5-Chlor-3-methoxyanilin, 5-Chlor-3-methylanilin, 4-Chlor-2-methoxyanilin, 4-Chlor-2-5-methylanilin, 2,4,5-, 2,3,4-, 2,3,5-, 2,4,6-, 2,3,6- und 3,4,5-Trichloranilin, 2-, 3- und 4-Aminobenzoesäure, 2-, 3- und 4-Aminobenzoesäuremethylester, -ethylester, -propylester oder -butylester, 2-, 3- und 4-Aminobenzamid, 3-Chlor-2-methylanilin, 3-Chlor-2-methoxyanilin, 5-Methyl-2-methoxyanilin, 2-, 3- und 4-Ethylanilin, 4-Chlor-2-trifluormethyl-anilin, 2-Chlor-5-trifluormethylanilin, 3,5-Bis(trifluormethyl)-anilin, 5-Chlor-2-phenoxyanilin, 5-Chlor-2-(4-chlorphenoxy)-anilin, 2-Chlor-4-cyano-5-methylanilin, 3-Aminobenzamid, das in 4-Stellung durch Chlor, Methoxy, Methyl oder Carbomethoxy substituiert ist, 4-Aminobenzamid, das in 3-Stellung durch Chlor, Methoxy, Methyl oder Carbomethoxy substituiert ist, sowie Derivate der vorstehenden Benzamide, die am Amid-Stickstoffatom durch Gruppen wie Methyl, Ethyl, Phenyl, Methylphenyl, Dimethylphenyl, insbesondere 2,4-Dimethylphenyl, Chlor- und Dichlorphenyl, insbesondere 4-Chlorphenyl, 2,5-Dichlorphenyl, 2-, 3- und 4-Carbamoylphenyl, Methoxyphenyl, 1,3-Benzthiazol-2-yl oder Benzimidazol-2-on-5-yl substituiert sind, 3-Amino-4-methyl-N-(4-sulfophenyl)-benzamid, 4-Phenoxy-anilin, 4-Phenylazoanilin, 4-(2-Methylphenylazo)-anilin, 2-, 3- und 4-Aminobenzolsulfonamid, 4-Amino-3-methoxybenzolsulfonamid, 4-Amino-2,5-dimethoxybenzolsulfonamid, 4-Amino-2-methoxy-5-methylbenzolsulfonamid, Derivate der vorstehenden Benzolsulfonamide, die am Amid-Stickstoffatom durch Gruppen wie Methyl, Ethyl, Phenyl, Methylphenyl, Chlorphenyl, Dichlorphenyl, Dimethylphenyl oder Methoxyphenyl substituiert sind, 2-Amino-benzol-1,4-dicarbonsäuredimethylester oder -ethylester, 5-Aminobenzol-1,3-dicarbonsäuredimethylester oder -ethylester, 3-Amino-2-methyl-N,N-dimethylbenzolsulfonamid, 4-Amino-2,5-dimethoxybenzolsulfanilid, 4-Amino-2,5-dimethoxybenzolsulfmethylamid, 4-Amino-2-methoxy-5-methylbenzolsulfmethylamid, 3-Amino-4-methoxybenzanilid, 4-Amino-2,5-dimethoxy-N- (2,4-dimethylphenyl)-benzamid, 2-Phenylsulfonylanilin, 2-(Ethylsulfonyl)-5-trifluormethylanilin, 5-(Ethylsulfonyl)-2-methoxyanilin, 5-Benzylsulfonyl-2-methoxyanilin, 3-Amino-4-methoxy-N,N-diethylbenzolsulfonamid, 3-Amino-4-methoxy-N-butylbenzolsulfonamid, 5-Amino-2-methyl-N-phenylbenzolsulfonamid, 4-Benzoylamino-2,5-dimethoxyanilin, 4-Benzoylamino-2-chlor-5-methoxyanilin, 4-Benzoylamino-2-methoxy-5-methylanilin, 4-Cyano-2,5-dimethoxyanilin, 4-Benzoylamino-2,5-dimethoxyanilin, 5-Benzoylamino-2,4-dimethylanilin, 2,5-Dimethoxy-4-(4-nitrophenylazo)-anilin, 4-(2,6-Dichlor-4-nitrophenylazo)-2,5-dimethoxyanilin, 2-(2-Chlor-4-nitrophenylazo-)-5-methoxy-4-methylanilin, 4-(2-methylphenylazo)-2-methylanilin, 4-(3-Methylphenyl-azo)-3-methylanilin, 4-(4-Methyl-nitrophenylazo)-2methoxy-5-methylanilin, 4-Phenylamino-anilin, 2-Methoxy-4-phenylamino-anilin, 4-(4-Methoxy-phenylamino)-anilin, 4-Acetylamino-anilin, 2-, 3- und 4-Aminobenzolsulfonsäure, 2-Amino-4-sulfo-benzoesäure, 3-Methyl-4-amino-benzoesäure, 2-Amino-1,4-benzoldisulfonsäure, 2-Amino-4-chlor-5-methylbenzolsulfonsäure, 2-Amino-5-chlor-4-methylbenzolsulfonsäure, 2-Amino-4-methylbenzolsulfonsäure, 5-Amino-2-chlor-4-sulfo-benzoesäure.

Bevorzugte substituierte Aniline sind beispielsweise 2-Nitroanilin, 2-Aminobenzoesäure, 4-Nitroanilin, 2,4-Dinitroanilin, 2-Aminobenzoesäuremethylester, -ethylester, -propylester und -butylester, 2,4-Dichloranilin, 2,5-Dichloranilin, 4-Chlor-2-methylanilin, 4-Chlor-2-nitroanilin, 4-Methyl-2-nitroanilin, 4-Methoxy-2-nitroanilin, 2-Methoxy-4-nitroanilin, 2-Trifluormethylanilin, 2-Chlor-4-trifluormethyl-anilin, 4-Chlor-2-trifluormethylanilin, 2-Amino-1,4-benzoldicarbonsäuredimethylester, 2,4,5-Trichloranilin, p-Aminoazobenzol, 4-Aminobenzamid, 3-Amino-4-methylbenzamid, 3-Amino-4-methyl-N-methylbenzoesäureamid, 3-Amino-4-methoxybenzanilid, 3-Amino-4-methoxycarbonyl-N- (2,5-dichlorphenyl)-benzamid, 3-Amino-4-methoxy-N-(4-carbamoylphenyl)-benzamid, 3-Amino-4-chlorbenzamid, N-(6-Chlorbenzothiazol-2-yl)-4-aminobenzamid, N-(2,4-Dihydroxychinazolin-6-yl)-4-aminobenzamid, 4-Phenoxyanilin, 2-Acetamino-4-amino-5-chlortoluol, 5-Amino-1,3-benzoldicarbonsäure-dimethylester, 2-Amino-5-chlor-4-methylbenzolsulfonsäure, 4-Amino-2,5-dimethoxy-N-methylbenzolsulfonamid, 4-Amino-2,5-dimethoxybenzolsulfanilid, 4-Amino-2-methoxy-5-methylbenzolsulfmethylamid und 3-Amino-4-methoxy-N,N-diethylbenzolsulfonamid.

Geeignete aromatische Amine sind auch Naphthylamine und substituierte Naphthylamine, wie 1-Naphthylamin, 2-Naphthylamin, 4-Nitro-naphthylamin, 2- oder 4-Methoxy-naphthylamin, 4-Chlor-naphthylamin, 2- oder 4-Ethoxy-naphthylamin, 2- oder 4-Methyl-naphthalin, 4-(2-Ethoxyphenylazo)-naphthylamin, und 4-(2-Methoxyphenylazo)-naphthylamin sowie Aminofluorene, wie 2-Aminofluoren, weiterhin Aminoanthrachinone, wie beispielsweise 1-Aminoanthrachinon, 2-Aminoanthrachinon, 1-Amino-3-bromanthrachinon, und 1-Amino-3-chlor-anthrachinon, 1-Amino-2-chloranthrachinon, 1-Amino-4-chloranthrachinon, 1-Amino-5-chloranthrachinon, 1-Amino-6-chloranthrachinon, 1-Amino-5,8-dichloranthrachinon, 1-Amino-2-bromanthrachinon, 1-Amino-2,4-dibromanthrachinon, 1-Amino-6,7-dichloranthrachinon, 1-Amino-6-fluor-anthrachinon, 1-Amino-7-fluoranthrachinon, 1-Amino-6,7-difluoranthrachinon, 2-Amino-1-chloranthrachinon, 2-Amino-3-chloranthrachinon, 2-Amino-3-bromanthrachinon, 1-Amino-4-nitroanthrachinon, 1-Amino-5-nitroanthrachinon, 1-Amino-2-methylanthrachinon, 1-Amino-2-methyl-4-chlor-anthrachinon, 1-Amino-2-methyl-4-bromanthrachinon, 1-Aminoanthrachinon-2-carbonsäure, 1-Aminoanthrachinon-2-carbonsäureamid, 1-Aminoanthrachinon-2-carbonsäuremethylester, 1-Amino-4-nitroanthrachinon-2-carbonsäure, 1-Amino-2-acetylanthrachinon, 1-Amino-4-acetylaminoanthrachinon, 1-Amino-5-acetylaminoanthrachinon, 1-Amino-5-benzoylaminoanthrachinon, 1-Amino-4-benzoylaminoanthrachinon, 1-Amino-8-benzoylaminoanthrachinon, 1-Amino-4-hydroxyanthrachinon, 1-Amino-5-hydroxyanthrachinon, 1-Amino-4-methoxyanthrachinon, 1-Amino-2-methoxy-4-hydroxyanthrachinon, 1-Amino-4-methylaminoanthrachinon, 1-Amino-4-benzylaminoanthrachinon, 1-Amino-4-cyclohexylaminoanthrachinon, 1-Amino-4-anilinoanthrachinon, 1-Amino-2-brom-4-(methylmercapto)-anthrachinon, 1-Amino-4-(4-methylphenylsulfonylamino)-2-(phenylthio)-anthrachinon und 1-Amino-6-(methylmercapto)-anthrachinon.

Weitere geeignete aromatische Amine sind heterocyclische Amine, wie 2-Aminocarbazol, 5-Aminobenzimidazol-2-on, 6-Aminobenzthiazol, 6-Amino-2-acetamido-benzthiazol, 7-Aminochinolin, 7-Amino-2-hydroxychinolin, 7-Amino-2-hydroxy-4-methylchinolin und 7-Amino-2-hydroxy-4-methyl-6-methoxychinolin, 5-Amino-6-methyl-benzimidazol-2-on. Weitere geeignete heterocyclische Amine sind 2-Amino-6-methoxy-benzothiazol, 2-Amino-6-ethoxy-benzothiazol, 2-Amino-6-nitro-benzothiazol, 3-Amino-6-chlor-indazol, 5-Aminophthalimid, 6-Amino-chinazolin-2,4-dion, 6-Amino-3-methyl-chinazolin-2,4-dion, 7-Amino-chinazolin-2,4-dion, 6-Amino-2-methyl-chinazolin-4-on, 6-Amino-2-hydroxy-4-methylchinolin, das zusätzlich durch die Gruppe 5-Methyl, 7-Chlor, 7-Methyl, 7-Ethoxy, 8-Methyl, 8-Methoxy oder 8-Carbomethyl substituiert sein kann, 6-Amino-5-chlor-4,8-dimethyl-2-hydroxychinolin,6-Amino-8-chlor-4,5-dimethyl-2-hydroxychinolin, 6-Amino-5,8-dimethoxy-4-methyl-2-hydroxychinolin, 6-Amino-5-chlor-2-hydroxy-8-methoxy-4-methylchinolin, 6-Amino-4,5,8-trimethyl-2-hydroxychinolin, 7-Amino-2-hydroxy-4-methyl-chinolin, das zusätzlich durch 6-Nitro, 6-Sulfo, 6-Isopropoxy, 6-Butoxy, 6-Methoxy, 6-Methyl, 6-Chlor, 5-Chlor oder 5-Methyl substituiert sein kann, 6-Amino-5,8-dimethyl-2-hydroxychinolin, 5-Aminoindazol, 6-Aminoindazol, 7(8)-Amino-4-methylbenzimidazo[1,2-a]pyrimid-2-on, 5-Amino-2-acetamidobenzimidazol, 5-Amino-2-carbomethoxyamino-benzimidazol, 6-Amino-phthalazin-1,4-dion, 6-Amino-chinoxalin-2,3-dion, 6-Amino-benzothiazol-2-on, 6(7)-Amino-3-phenyl-benzo[e][1,3]oxazin-2,4-dion, 6- oder 7-Amino-benzo[e][1,3]oxazin-2,4-dion, 5-Amino-1-methyl-benzimidazol-2-on, 6- oder 7-Aminobenzo[e][1,4]oxazin-3-on, 5-Amino-2-(2-hydroxyphenyl)-benzotriazol, 11-Amino-dibenzo[a,c]phenazin, 4- oder 3-Amino-1,8-naphthalimid, 5-Amino-benzimidazol-2-on, das in Position 6 durch Carboxy, Nitro, Carboxyethyl, Brom, Carboxybutyl, Chlor, Carboxymethyl, Methoxy oder Ethoxy substituiert ist, 5-Amino-benzimidazol-2-on, das in Position 7 durch Methoxy, Methyl

oder Chlor substituiert ist, 5-Amino-4,6-dichlor-benzimidazol-2-on, 5-Amino-4,6,7-triclorbenzimidazol-2-on, 6-Amino-4-chlor-5-nitrobenzimidazol-2-on, 7-Amino-5-chlor-1-methylbenzimidazol-2-on, 8-Amino-6-chlor-1-methylchinoxalin-2,3-dion, 4-Amino-6-chlorbenzimidazol, 4-Amino-6-chlor-2-methylbenzimidazol, Aminobenzo[c,d]indol-2-on, 6-Amino-7-nitrochinazolin-2,4-dion, 6-Amino-7-chlorchinazolin-2,4-dion, 6-Amino-8-nitrochinazolin-2,4-dion, 7-Amino-6-nitrochinazolin-2,4-dion, 6-Amino-chinoxalin-2,3-dion, das in Position 7 durch Carboxy, Methoxy, Ethoxy, Methyl, Chlor oder Nitro substituiert ist, 7-Amino-5-chlorchinoxalin-2,3-dion, 6-Amino-5,7-dichlorchinoxalin-2,3-dion, 6-Amino-5,7,8-trichlorchinoxalin-2,3-dion, 6-Amino-5-chlor-benzoxazol-2-on, 5-Amino-7-chlor-benzoxazol-2-on, 5-Amino-6-methylbenzimidazol-2-thion.

Das für die erfindungsgemäße Azokupplung als Kupplungskomponente zu verwendende 1,5-Diazabicyclo[3.3.0]octan-2,4,6,8-tetron ist bekannt. Die Verbindung kann beispielsweise nach Arch. Pharm. (Weinheim) 319, 646 (1986) aus Pyrazolidin-3,5-dion durch Umsetzung mit Malonsäuredichlorid oder nach GB-A-1357639 durch Umsetzung von Malonsäurediethylester mit Hydrazindihydrochlorid und Natriumbutylat hergestellt werden.

Die Herstellung der erfindungsgemäßen Verbindungen der Formel (I), erfolgt nach an sich bekannten Verfahren durch Kuppeln der diazotierten Amine mit der genannten Kupplungskomponente im wäßrigen Medium, gegebenenfalls in Gegenwart nicht-ionogener, anionaktiver oder kationaktiver oberflächenaktiver Substanzen. Gegebenenfalls können im Herstellungsprozeß der Farbmittel auch andere Hilfmittel, wie natürliche oder synthetische Harze oder Harzderivate oder Lack-, Druckfarben- oder Kunststoffadditive, verwendet werden. Die Kupplungsreaktion kann auch ganz oder teilweise in organischen Lösungsmitteln erfolgen.

Die erfindungsgemäßen Verbindungen der Formel (I) stellen wertvolle wasserunlösliche Farbmittel dar und können nach der Kupplungsreaktion in üblicher Weise isoliert werden. Häufig ist es zweckmäßig die nach der Kupplungsreaktion erhaltenen Azofarbmittel, insbesondere im Falle von Pigmenten, zur Erzielung der vollen Farbstärke und einer besonders günstigen Kristallstruktur einer Nachbehandlung zu unterwerfen. Beispielsweise kann man zu diesem Zweck die feuchten oder getrockneten und gemahlenen Verbindungen in organischen Lösungsmitteln, wie beispielsweise Pyridin, N-Methyl-2-pyrrolidon, Dimethylformamid, Dimethylsulfoxyd, Alkoholen, Chlorbenzol, Dichlorbenzol, Eisessig, Chinolin, Glycol, Nitrobenzol oder hochsiedenden aromatischen Kohlenwasserstoffen, einige Zeit unter Rückfluß oder unter Druck auf höhere Temperaturen erhitzen. In einigen Fällen gelingt die Überführung in eine besonders günstige Kristallstruktur auch schon durch Erhitzen mit Wasser, gegebenenfalls unter Druck und gegebenenfalls unter Zusatz von Dispergiermitteln oder organischen Lösungsmitteln, beispielsweise der vorstehend genannten Art.

Weiterhin lassen sich erfindungsgemäße Verbindungen der Formel I, die eine oder mehrere verlackbare saure Gruppen, wie Sulfo- und Carboxygruppen enthalten, nach bekannten Verfahren in Farblacke überführen. Zur Bildung der Farblacke dienen die üblichen Metallionen, vorzugsweise Mangan- oder Strontium-, insbesondere aber Calcium- und Bariumionen.

Gegenstand der Erfindung ist auch die Verwendung der erfindungsgemäß hergestellten wasserunlöslichen Verbindungen der Formel I zum Färben von natürlichen und synthetischen Materialien. Je nachdem, ob die erfindungsgemäßen Verbindungen keine oder kurze Alkylketten, etwa bis $C_4$, oder aber mittlere oder lange Alkylketten aufweisen, sind sie beispielsweise als Pigmente, Dispersionsfarbstoffe oder Fettfarbstoffe geeignet. Bevorzugt ist die Verwendung der erfindungsgemäßen Verbindungen mit kurzen Alkylketten oder ohne Alkylketten als Pigmente. Beispielsweise sind sie geeignet zum Färben, bzw. Pigmentieren, von Polystyrol, Polyolefinen, insbesondere Polyethylen oder Polypropylen, Polyacrylverbindungen, Polyvinylverbindungen, insbesondere Polyvinylchlorid oder Polyvinylacetat, Polyestern, Gummi, Caseinharzen und Silikonharzen. Sie eignen sich ferner für die Herstellung von Druckfarben, für die Zubereitung von Lackfarben und Dispersionsanstrichfarben, für den Druck auf Substraten wie Textilfasern oder auch auf anderen flächenförmigen Gebilden, wie beispielsweise Papier.

Die erfindungsgemäßen Pigmente können auch - vorzugsweise in feinverteilter Form - zum Färben von Kunstseide aus Viskose oder Celluloseäthern, Celluloseestern, Polyamiden, Polyurethanen oder Polyglykolterephthalaten in der Spinnmasse oder zum Einfärben von Papier verwendet werden.

In den folgenden Beispielen beziehen sich "Teile" auf das Gewicht, "Volumenteile" verhalten sich zu Gewichtsteilen wie Liter zu Kilogramm.

**Beispiele**

1) 34,12 Teile 3-Amino-4-chlorbenzamid werden in 200 Teilen Wasser mit 60 Volumenteilen 31 %iger Salzsäure über Nacht verrührt. Dann wird auf 5°C gekühlt und mit 40 Volumenteilen 5-normaler Nariumnitritlösung diazotiert. Man läßt eine Stunde nachrühren, zerstört den Nitritüberschuß mit Amidosulfonsäure und klärt die Diazoniumsalzlösung durch Filtration.

16,81 Teile 1,5-Diazabicyclo[3.3.0]octan-2,4,6,8-tetron werden in 760 Teilen Wasser suspendiert, durch Zugabe von 40 Volumenteilen 4-normaler Natriumacetatlösung gelöst und die Lösung anschließend geklärt.

Im Kuppelgefäß werden die geklärte Diazoniumsalzlösung und 20 Volumenteile einer 10 %igen wäßrigen Lösung des Reaktionsprodukts aus 1 Mol Oleylalkohol und 25 Mol Ethylenoxid vorgelegt. Zu dieser Mischung läßt man bei 10 bis 15° C die Lösung der Kupplungskomponente langsam zutropfen oder zulaufen. Nach beendeter Kupplung erhitzt man durch Einleiten von Dampf auf 80° C, saugt das Pigment nach 10 Minuten ab und wäscht es mit Wasser. Der feuchte Preßkuchen wird anschließend mit 500 Volumenteilen Eisessig versetzt und 30 Minuten am Rückfluß erhitzt. Nach Erkalten wird das Pigment abgesaugt, mit Eisessig und anschließend mit Wasser gewaschen, getrocknet und gemahlen. Das erhaltene Disazopigment entspricht der obengenannten Formel (I), in der $D^1$ und $D^2$ jeweils den Rest 5-Carbamoyl-2-chlorphenyl bedeuten. Das Pigment zersetzt sich bei 346 bis 350° C und ergibt beim Einarbeiten in einen Alkyd-Melaminharz-Lack Färbungen von ausgezeichnetem Deckvermögen, guter Lichtechtheit und einwandfreier Überlackechtheit.

2) 57,06 Teile 3-Amino-4-methoxy-N-(4-carbamoylphenyl-benzamid werden mit 800 Volumenteilen Eisessig und 60 Volumenteilen 31 %iger Salzsäure 1 Stunde lang verrührt, auf 10° C abgekühlt und mit 40 Volumenteilen 5-normaler Natriumnitritlösung diazotiert. Nach 45 Minuten Rühren wird der Nitritüberschuß mit Amidosulfonsäure zerstört und die Diazoniumsalzlösung geklärt.

Die Diazoniumsalzlösung wird nun mit 20 Volumenteilen einer 10 %igen wäßrigen Lösung des Reaktionsprodukts aus 1 Mol Oleylalkohol und 25 Mol Ethylenoxid sowie 100 Volumenteilen 4-normaler Natriumacetatlösung versetzt. Zu der erhaltenen Mischung läßt man bei 15 bis 20° C eine entsprechend Beispiel 1 bereitete Lösung der Kupplungskomponente langsam zutropfen.

Nach beendeter Kupplung wird durch Einleiten von Dampf auf 95° C erhitzt, und nach 10 Minuten bei dieser Temperatur das Pigment abgesaugt und mit Wasser gewaschen. Der feuchte Preßkuchen wird unter Rühren mit 1000 Volumenteilen Eisessig versetzt und die erhaltene Mischung für 10 Minuten unter Rückfluß erhitzt. Nach Abkühlen wird das Pigment abgesaugt, mit Eisessig und anschließend mit Aceton gewaschen, getrocknet und gemahlen. Die Struktur des erhaltenen Pigments entspricht der Formel (I), in der $D^1$ und $D^2$ jeweils den Rest 5-[4-(Carbamoyl)-phenylaminocarbonyl]-2-methoxy-phenyl bedeuten. Das Pigment weist einen Zersetzungspunkt von 318 bis 319° C auf. Es ergibt beim Einarbeiten in Polyvinylchlorid oder in einen Alkyd-Melamin-Lack rote Färbungen von ausgezeichneter Migrations- und Lösemittelechtheit.

3) bis 38) In analoger Weise zu den Beispielen 1) und 2) erhält man unter Verwendung von Diazokomponenten der Formel (Ia) Azopigmente der Formel (I), in der D1 und D2 den mit der Aminogruppe verbundenen Arylrest in Formel (Ia) bedeuten. Die Azopigmente werden außerdem durch die in der Tabelle angegebenen Farbtöne und Zersetzungspunkte (Zers.-P.) charakterisiert:

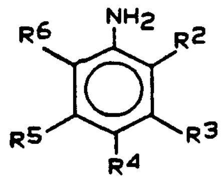

(Ia)

| Bsp. | $R^2$ | $R^3$ | $R^4$ | $R^5$ | $R^6$ | Zers.-P. [°C] | Farbton |
|---|---|---|---|---|---|---|---|
| 3 | $OCH_3$ | H | $SO_2NHC_6H_5$ | $OCH_3$ | H | > 340 | blaustichig-rot |
| 4 | $NO_2$ | H | Cl | H | H | > 340 | orange |
| 5 | $OCH_3$ | H | H | $CONHC_6H_5$ | H | 320-325 | gelbstichig-rot |
| 6 | $CF_3$ | H | H | H | H | 311-313 | rotstichig-gelb |
| 7 | $CO_2CH_3$ | H | H | H | H | 325-328 | rotstichig-gelb |
| 8 | $CO_2CH_3$ | H | H | CONH— 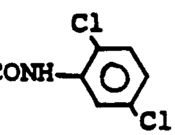 | H | 332-335 | grünstichig-gelb |
| 9 | $CH_3$ | H | $SO_2NHCH_3$ | $OCH_3$ | H | 334-336 | orange |
| 10 | $CH_3$ | H | | $NO_2$ | H | 301-303 | rotstichig-gelb |
| 11 | Cl | H | $NO_2$ | H | H | > 340 | orange |
| 12 | $NO_2$ | H | $NO_2$ | H | H | > 340 | gelb |
| 13 | H | $CO_2CH_3$ | H | $CO_2CH_3$ | H | 293-295 | gelb |
| 14 | $OCH_3$ | H | H | $SO_2N(C_2H_5)_2$ | H | 295-298 | orange |
| 15 | $CH_3$ | H | H | $CONHCH_3$ | H | 295-298 | orange |
| 16 | Cl | H | H | $CF_3$ | H | 351-352 | rotstichig-gelb |
| 17 | Cl | H | Cl | H | H | > 340 | orange |
| 18 | Cl | H | Cl | Cl | H | 346-348 | rotstichig-gelb |

| Bsp. | $R^2$ | $R^3$ | $R^4$ | $R^5$ | $R^6$ | Zers.-P. [°C] | Farbton |
|---|---|---|---|---|---|---|---|
| 19 | $OCH_3$ | H | $NO_2$ | H | H | > 350 | orange |
| 20 | $OCH_3$ | H | $SO_2NHCH_3$ | $OCH_3$ | H | 343 | blaustichig-rot |
| 21 | $NO_2$ | H | $CH_3$ | H | H | > 340 | orange |
| 22 | H | H | $CONH_2$ | H | H | > 340 | rotstichig-gelb |
| 23 | H | H | $NO_2$ | H | H | > 340 | gelb |
| 24 | $CO_2H$ | H | H | H | H | 298-301 | orange |
| 25 | $CO_2C_4H_9$ | H | H | H | H | 285 | rotstichig-gelb |
| 26 | $CH_3$ | H | Cl | H | H | 308-310 | orange |
| 27 | Cl | H | $CH_3$ | $NHCOCH_3$ | H | 318 | blaustichig-rot |
| 28 | $CO_2CH_3$ | H | H | $CO_2CH_3$ | H | 340 | gelb |
| 29 | H | H | H | H | H | 294 | rotstichig-gelb |
| 30 | $CH_3$ | H | H | H | H | 264 | orange |
| 31 | H | Cl | H | H | H | 320-324 | rotstichig-gelb |
| 32 | H | H | Cl | H | H | 320-323 | rotstichig-gelb |
| 33 | $CH_3$ | H | $CH_3$ | H | H | 255 | orange |
| 34 | Cl | H | H | Cl | H | 338 | rotstichig-gelb |
| 35 | Cl | H | H | H | H | 305 | rotstichig-gelb |
| 36 | H | COOH | H | H | H | > 350 | rotstichig-gelb |
| 37 | H | H | $CH_3$ | H | H | 320 | orange |
| 38 | COOH | H | H | Cl | H | 318-319 | rotstichig-gelb |

39) 31,38 Teile 4-Chlor-2-nitroanilin und 3,10 Teile 3-Amino-4-chlorbenzamid (Molverhältnis zueinander von 10:1) werden in 300 Teilen Wasser und 60 Volumenteilen 31 %iger Salzsäure 2 Stunden verrührt, die Mischung dann auf 5 °C gekühlt und bei 5-10 °C durch Zugabe von 40 Volumenteilen 5-normaler Natriumnitritlösung diazotiert. Man läßt eine Stunde nachrühren, zerstört den Nitritüberschuß mit Amidosulfonsäure und klärt. Die so erhaltene Lösung der Diazokomponenten wird analog der Lösung der Diazokomponente in Beispiel 1 umgesetzt und das erhaltene Rohpigment analog Beispiel 1 behandelt. Man erhält ein orangefarbenes Pigment mit einem Zersetzungspunkt von über 350 °C.

40) Man verfährt analog Beispiel 39), verwendet jedoch ein Molverhältnis von 1:1 der Diazokomponenten zueinander. Es wird ein orangefarbenes Pigment mit einem Zersetzungspunkt von 310 bis 313 °C erhalten.

41) Man verfährt analog Beispiel 39), verwendet jedoch als Diazokomponenten 4-Chlor-2-nitroanilin und 3-Amino-4-chlorbenzamid im Molverhältnis von 1:10. Man erhält ein orangefarbenes Pigment mit einem

Zersetzungspunkt von 330 °C.

42) Man verfährt analog Beispiel 39), verwendet jedoch als Diazokomponenten 3-Amino-4-methoxybenzanilid und 4-Amino-2-methoxy-5-methylbenzolsulfonsäure-methylamid im Molverhältnis 10:1. Man erhält ein gelbstichig-rotes Pigment mit einem Zersetzungspunkt von 308 °C.

43) Man verfährt analog Beispiel 42), verwendet jedoch ein Molverhältnis von 1:1. Das erhaltene gelbstichig-rote Pigment hat ein Zersetzungspunkt von 276 bis 278 °C.

44) Man verfährt analog Beispiel 42), verwendet jedoch ein Molverhältnis von 1:10. Man erhält ein orangefarbenes Pigment mit einem Zersetzungspunkt von 306 °C.

45) Man verfährt analog Beispiel 39), verwendet jedoch als Diazokomponenten 2-(Trifluormethyl)-anilin und Anthranilsäuremethylester im Molverhältnis von 10:1. Das erhaltene rotstichig-gelbe Pigment hat einen Zersetzungspunkt von 321 °C.

46) Verfährt man analog Beispiel 45), verwendet jedoch ein Molverhältnis von 1:1, so erhält man ein rotstichiggelbes Pigment mit einem Zersetzungspunkt von 302 °C.

47) Verfährt man analog Beispiel 45), verwendet jedoch ein Molverhältnis von 1:10, so erhält man ein rotstichiggelbes Pigment mit einem Zersetzungspunkt von 301 °C.

48) bis 61) Verfährt man analog Beispiel 1) oder 2), verwendet jedoch anstelle der dortigen Diazokomponenten die in der folgenden Tabelle aufgeführten aromatischen Amine im entsprechenden Molverhältnis, bezogen auf die Menge an eingesetzter Kupplungskomponente, so erhält man weitere erfindungsgemäße Pigmente mit den in der Tabelle angegebenen Farbtönen und Zersetzungspunkten (Zers.-P.):

| Bsp. | D-$NH_2$ (Diazokomponente) | Zers.-P. [°C] | Farbton |
|---|---|---|---|
| 48 | 1-Aminoanthrachinon | > 350 | mittleres Gelb |
| 49 | 2-Aminoanthrachinon | > 350 | rötliches Gelb |
| 50 | 4-Phenylazo-anilin | > 350 | rot |
| 51 | 2-Aminofluoren | 340 | ziegelrot |
| 52 | 1-Amino-4-nitronaphthalin | 325 | marron |
| 53 | 4-(2-Methylphenylazo)-2-methyl-anilin | > 350 | braun |
| 54 | 4-Phenoxyanilin | 305 | scharlach |
| 55 | 2-Aminocarbazol | 308 | braun |
| 56 | 6-Amino-2-acetamido-benzothiazol | 350 | marron |
| 57 | 4-Amino-N-(6-chlorbenzthiazol-2-yl)-benzamid | > 350 | orange |
| 58 | 7-Amino-2-hydroxy-4-methylchinolin | 345 | braun |
| 59 | 7-Amino-2-hydroxy-6-methoxy-4-methylchinolin | 340 | braun |
| 60 | 4-Amino-N-(2,4-dihydroxychinazolin-6-yl)-benzamid | > 350 | orange |
| 61 | 5-Amino-6-methyl-benzimidazol-2-on | 340 | violett |

62) 22,2 Teile 2-Amino-5-chlor-4-methylbenzolsulfonsäure werden in 300 Vol.-Teilen Wasser und 30 Vol.-Teilen 31 %iger Salzsäure über Nacht verrührt. Bei 0-5 °C wird mit 20 Vol.-Teilen 5N-Natriumnitritlösung diazotiert, 1 Std. mit Natriumnitritüberschuß nachgerührt und der Nitritüberschuß mit Amidosulfonsäure zerstört.

Die durch Filtration geklärte Diazoniumsalzlösung versetzt man nun mit 10 Volumenteilen einer 10 %igen wäßrigen Lösung des Reaktionsprodukts aus 1 Mol Oleylalkohol und 25 Mol Ethylenoxid und stellt den pH-Wert der Lösung mit 4N-Natriumacetatlösung auf 4,6 ein.

Zu der erhaltenen Mischung läßt man bei 15-20 °C eine entsprechend Beispiel 1 bereitete Lösung mit 8,4 Teilen Kupplungskomponente langsam zutropfen. Nach beendeter Kupplung stellt man den pH-Wert der Mischung mit 31 %iger Salzsäure auf 1 und saugt den Feststoff ab.

Der Preßkuchen wird in 5000 Teilen Wasser verrührt, und man läßt anschließend eine Lösung aus 35 Teilen Calciumchlorid in 350 Teilen Wasser langsam zutropfen, rührt eine Std. nach und erhitzt die Reaktionsmischung für 30 Minuten auf 80 °C. Die noch heiße Mischung saugt man ab, wäscht mit Wasser und trocknet. Nach dem Mahlen werden so 27,4 Teile eines blaustichig-roten Pigments mit einem Schmp. >350 °C erhalten.

## Patentansprüche

**1.** Verbindung der idealisierten allgemeinen Formel (I)

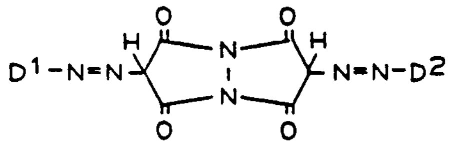

(I)

worin $D^1$ und $D^2$ unabhängig voneinander jeweils einen unsubstituierten oder substituierten Arylrest oder Heteroarylrest bedeuten, wobei jeweils die Substituenten die Bedeutung von $A^1$ oder $A^2$ haben und

$A^1$ für einen Rest aus der Gruppe gesättigtes oder ungesättigtes, geradkettiges oder verzweigtes $C_1$-$C_{24}$-Alkyl, $C_1$-$C_{24}$-Alkoxy, $C_1$-$C_{24}$-Hydroxyalkyl, $C_5$-$C_{10}$-Cycloalkyl, $C_1$-$C_{24}$-Alkoxy-carbonyl, $C_2$-$C_{25}$-Alkanoyloxy, $C_2$-$C_{25}$-Alkanoylamino, $C_1$-$C_{24}$-Alkylsulfonyl, Carbamoyl, N-($C_1$-$C_{12}$-Alkyl)-aminocarbonyl, N,N-Di-($C_1$-$C_{12}$-Alkyl)-aminocarbonyl, $C_1$-$C_{12}$-Alkylamino, N,N-Di-($C_1$-$C_{12}$-Alkyl)-amino, Sulfamoyl, N-($C_1$-$C_{12}$-Alkyl)-aminosulfonyl, N,N-Di-($C_1$-$C_{12}$-Alkyl)-aminosulfonyl, Halogen, Nitro, Cyano, Trifluormethyl, Carboxy, Sulfo, $C_1$-$C_{12}$-Alkylthio, $C_2$-$C_{25}$-Alkanoyl und Hydroxy steht und

$A^2$ für einen Rest der Formel Ar-W- steht, in der W eine direkte Bindung oder eine divalente Gruppe der Formel -S-, -O-, -CO-, -CO-O-, -O-CO-, -CO-NH-, -NH-CO-, -SO-, $-SO_2-$, $-SO_2NH-$, $-NHSO_2-$, $-CH_2-$, $-CH(CH_3)-$, $-C(CH_3)_2-$, -NR'-, in der R' Wasserstoff oder $C_1$-$C_6$-Alkyl bedeutet, oder -N=N- oder eine Kombination aus mindestens zwei der vorstehenden divalenten Gruppen ist und

Ar den Rest eines carbocyclischen oder heterocyclischen aromatischen Systems mit ein oder zwei Ringen bedeutet, wobei das aromatische System zusätzlich 1-3 der vorstehend definierten Substituenten $A^1$ aufweisen kann.

**2.** Verbindung nach Anspruch 1, dadurch gekennzeichnet, daß $D^1$ und $D^2$ unabhängig voneinander jeweils einen Rest einer aromatischen Verbindung aus der Benzol-, Naphthalin-, Fluoren- oder Athrachinon-Reihe oder aus der heterocyclischen Reihe bedeuten.

**3.** Verbindung nach Anspruch 1 oder 2, dadurch gekennzeichnet, daß $D^1$ und $D^2$ unabhängig voneinander jeweils einen unsubstituierten oder substituierten Arylrest oder Heteroarylrest aus der folgenden Gruppe bedeuten: Phenyl, Phenyl mit 1-3 Substituenten, Naphthyl, Naphthyl mit 1-4 Substituenten, ein Rest eines Anthrachinons oder Fluorens, der bis zu 4 Substituenten aufweisen kann, ein Rest eines heterocyclischen Systems mit 1 bis 5 fünf- oder sechs-gliedrigen Ringen, das bis zu 4 Substituenten aufweisen kann, wobei jeweils die Substituenten die Bedeutung von $A^1$ oder $A^2$ haben und

$A^1$ für einen Rest aus der Gruppe gesättigtes oder ungesättigtes, geradkettiges oder verzweigtes $C_1$-$C_{24}$-Alkyl, $C_1$-$C_{24}$-Alkoxy, $C_1$-$C_{24}$-Hydroxyalkyl, $C_5$-$C_{10}$-Cycloalkyl, $C_1$-$C_{24}$-Alkoxy-carbonyl, $C_2$-$C_{25}$-Alkanoyloxy, $C_2$-$C_{25}$-Alkanoylamino, $C_1$-$C_{24}$-Alkylsulfonyl, Carbamoyl, N-($C_1$-$C_{12}$-Alkyl)-aminocarbonyl, N,N-Di-($C_1$-$C_{12}$-Alkyl)-aminocarbonyl, $C_1$-$C_{12}$-Alkylamino, N,N-Di-($C_1$-$C_{12}$-Alkyl)-amino, Sulfamoyl, N-($C_1$-$C_{12}$-Alkyl)-aminosulfonyl, N,N-Di-($C_1$-$C_{12}$-Alkyl)-aminosulfonyl, Halogen, Nitro, Cyano, Trifluormethyl, Carboxy, Sulfo, $C_1$-$C_{12}$-Alkylthio, $C_2$-$C_{25}$-Alkanoyl und Hydroxy steht und

$A^2$ für einen Rest der Formel Ar-W- steht, in der W eine direkte Bindung oder eine divalente Gruppe der Formel -S-, -O-, -CO-, -CO-O-, -O-CO-, -CO-NH-, -NH-CO-, -SO-, $-SO_2-$, $-SO_2NH-$, $-NHSO_2-$, $-CH_2-$, $-CH(CH_3)-$, $-C(CH_3)_2-$, -NR′-, in der R′ Wasserstoff oder $C_1$-$C_6$-Alkyl bedeutet, oder -N=N-oder eine Kombination aus mindestens zwei der vorstehenden divalenten Gruppen ist und

Ar den Rest eines carbocyclischen oder heterocyclischen aromatischen Systems mit ein oder zwei Ringen bedeutet, wobei das aromatische System zusätzlich 1-3 der vorstehend definierten Substituenten $A^1$ aufweisen kann.

**4.** Verbindung nach mindestens einem der Ansprüche 1 bis 3, dadurch gekennzeichnet, daß $D^1$ und $D^2$ unabhängig voneinander jeweils einen Arylrest oder Heteroarylrest aus der folgenden Gruppe bedeuten:

Phenyl, Phenyl mit 1-3 Substituenten, Naphthyl, Naphthyl mit 1-3 Substituenten, ein Rest eines Anthrachinons oder Fluorens mit 1-3 Substituenten und ein Rest eines heterocyclischen Systems mit 1 bis 5 fünf- oder sechsgliedrigen Ringen, das jeweils 1-3 Substituenten aufweisen kann, wobei die Substituenten der substituierten Arylreste oder Heteroarylreste jeweils die Bedeutung von $A^1$ oder $A^2$ haben und

$A^1$ für einen Rest aus der Gruppe $C_1$-$C_4$-Alkyl, $C_1$-$C_4$-Alkoxy, $C_1$-$C_4$-Alkoxy-carbonyl, $C_2$-$C_5$-Alkanoyloxy, $C_2$-$C_5$-Alkanoylamino, Carbamoyl, N-($C_1$-$C_4$-Alkyl)-aminocarbonyl, N,N-Di-($C_1$-$C_4$-Alkyl)-amino-

carbonyl, Sulfamoyl, N-($C_1$-$C_4$-Alkyl)- und N,N-Di-($C_1$-$C_4$-Alkyl)-aminosulfonyl, Chlor, Brom, Nitro, Trifluormethyl, Ethylsulfonyl, Carboxy, Sulfo und Cyano und

$A^2$ für einen Rest der Formel Ar-W- steht, in der W eine divalente Gruppe der Formel -O-, -CO-O-, -O-CO-, -CO-NH-, -NH-CO-, $-SO_2-$, $-SO_2NH-$, $-NHSO_2-$, $-CH_2-$, -NH- oder -N=N-oder eine Kombination aus zwei der genannten divalenten Gruppen ist und

Ar Phenyl, Naphthyl oder Phenyl mit einem ankondensierten fünf- oder sechsgliedrigen heterocyclischen Ring mit ein oder zwei Heteroatomen oder einen der vorstehenden Reste Ar, der zusätzlich 1 bis 3 Substituenten $A^1$ der oben definierten Bedeutung aufweist, bedeutet.

**5.** Verbindung nach mindestens einem der Ansprüche 1 bis 4, dadurch gekennzeichnet, daß $D^1$ und $D^2$ unabhängig voneinander jeweils einen Arylrest oder Heteroarylrest aus der folgenden Gruppe bedeuten:
Phenyl, Naphthyl, Anthrachinon, Fluoren, Benzimidazol, Benzimidazol-2-on, Phthalsäureimid, Chinazolin, Chinazolin-4-on, Carbazol, Benzothiazol, Chinazolin-2,4-dion, Indol, Isoindol, Chinolin, Indazol, Chinolin-2-on, Benzimidazo[1,2-a]pyrimid-2-on, Benzthiazol-2-on, Benzo[e][1,3]oxazin-2,4-dion, Benzo-[e][1,4]oxazin-3-on, Benzotriazol, Benzoxazol-2-on, Benzimidazol-2-thion, Benzo[cd]indol-2-on, Benzo-[de]isochinolin-1,3-dion (Naphthalimid), 1,2,4-Thiadiazol, 1,3,4-Thiadiazol, Thiazol, Isothiazol, Thiophen, Dibenzo[a,c]phenazin, Isochinolin, Chinoxalin, Chinoxalin-2,3-dion, Cinnolin und Phthalazin, die jeweils 1-3 Substituenten aufweisen können.

**6.** Verfahren zur Herstellung der nach mindestens einem der Ansprüche 1 bis 5 definierten Verbindung der idealisierten allgemeinen Formel (I), dadurch gekennzeichnet, daß man ein oder mehrere Amine der Formel $D-NH_2$, worin D die Bedeutung von $D^1$ oder $D^2$ entsprechend Formel (I) hat, diazotiert und mit 0,5 mol 1,5-Diazabicyclo[3.3.0]octan-2,4,6,8-tetron pro mol insgesamt reagierender Diazoniumsalze kuppelt.

**7.** Verfahren nach Anspruch 6, dadurch gekennzeichnet, daß die Kupplung in Gegenwart von wenigstens einer nichtionogenen, anionaktiven oder kationaktiven oberflächenaktiven Substanz oder eines natürlichen oder synthetischen Harzes oder Harzderivats oder eines Lack-, Druckfarben- oder Kunststoffadditives erfolgt.

**8.** Verfahren nach Anspruch 6 oder 7, dadurch gekennzeichnet, daß ein Kupplungsprodukt, das eine oder mehrere verlackbare Gruppen aufweist, mit Hilfe von Metallionen in Farblacke übergeführt wird.

**9.** Verwendung der nach mindestens einem der Ansprüche 1 bis 5 definierten Verbindung der idealisierten allgemeinen Formel (I) zum Färben von natürlichen und synthetischen Materialien.

**10.** Verwendung nach Anspruch 9 zum Färben oder Pigmentieren von Polystyrol, Polyolefinen, Polyacrylverbindungen, Polyvinylverbindungen, Polyestern, Gummi, Caseinharzen, Silikonharzen, Kunstseide aus Viskose, Celluloseäthern, Celluloseestern, Polyamiden, Polyurethanen oder Polyglykolterephthalaten oder Papier oder für die Herstellung von Druckfarben, für die Zubereitung von Lackfarben oder Dispersionsanstrichfarben oder für den Druck auf Substraten oder flächenförmigen Gebilden.

**11.** Verbindung nach mindestens einem der Ansprüche 1 bis 5, dadurch gekennzeichnet, daß $D^1$ und $D^2$ die gleiche Bedeutung haben.

## Claims

**1.** A compound of the idealized general formula (I)

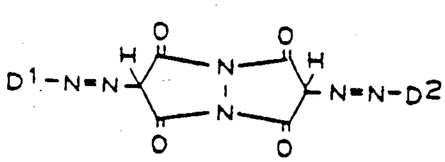

(I)

where $D^1$ and $D^2$ are each independently of the other unsubstituted or substituted aryl or hetaryl, each substituent having the meaning $A^1$ or $A^2$ where

$A^1$ stands for a radical from the group consisting of saturated or unsaturated straight-chain or branched $C_1$-$C_{24}$-alkyl, $C_1$-$C_{24}$-alkoxy, $C_1$-$C_{24}$-hydroxyalkyl, $C_5$-$C_{10}$-cycloalkyl, $C_1$-$C_{24}$-alkoxycarbonyl, $C_2$-$C_{25}$-alkanoyloxy, $C_2$-$C_{25}$-alkanoylamino, $C_1$-$C_{24}$-alkylsulfonyl, carbamoyl, N-($C_1$-$C_{12}$-alkyl)-aminocarbonyl, N,N-di-($C_1$-$C_{12}$-alkyl)aminocarbonyl, $C_1$-$C_{12}$-alkylamino, N,N-di-($C_1$-$C_{12}$-alkyl)amino, sulfamoyl, N-($C_1$-$C_{12}$-alkyl)aminosulfonyl, N,N-di-($C_1$-$C_{12}$-alkyl)aminosulfonyl, halogen, nitro, cyano, trifluoromethyl, carboxyl, sulfo, $C_1$-$C_{12}$-alkylthio, $C_2$-$C_{25}$-alkanoyl and hydroxyl and

$A^2$ stands for a radical of the formula Ar-W- where W is a direct bond or a divalent group of the formula -S-, -O-, -CO-, -CO-O-, -O-CO-, -CO-NH-, -NH-CO-, -SO-, - $SO_2$-, -$SO_2$NH-, -$NHSO_2$-, -$CH_2$-, -CH($CH_3$)-, -C($CH_3$)$_2$-, -NR'- where R' denotes hydrogen or $C_1$-$C_6$-alkyl, or is -N=N- or a combination of at least two of the foregoing divalent groups and
Ar denotes the radical of a carbocyclic or heterocyclic aromatic system comprising one or two rings, which aromatic system may additionally have 1-3 of the above-defined substituents $A^1$.

**2.** A compound as claimed in claim 1, wherein $D^1$ and $D^2$ are each independently of the other a radical of an aromatic compound from the benzene, naphthalene, fluorene or anthraquinone series or from the heterocyclic series.

**3.** A compound as claimed in claim 1 or 2, wherein $D^1$ and $D^2$ are each independently of the other unsubstituted or substituted aryl or hetaryl from the following group: phenyl, phenyl having 1-3 substituents, naphthyl, naphthyl having 1-4 substituents, a radical of an anthraquinone or fluorene with up to 4 substituents, a radical of a heterocyclic system-comprising 1 to 5 five- or six-membered rings with up to 4 substituents, each substituent having the meaning $A^1$ or $A^2$ where

$A^1$ stands for a radical from the group consisting of saturated or unsaturated straight-chain or branched $C_1$-$C_{24}$-alkyl, $C_1$-$C_{24}$-alkoxy, $C_1$-$C_{24}$-hydroxyalkyl, $C_5$-$C_{10}$-cycloalkyl, $C_1$-$C_{24}$-alkoxycarbonyl, $C_2$-$C_{25}$-alkanoyloxy, $C_2$-$C_{25}$-alkanoylamino, $C_1$-$C_{24}$-alkylsulfonyl, carbamoyl, N-($C_1$-$C_{12}$-alkyl)-aminocarbonyl, N,N-di-($C_1$-$C_{12}$-alkyl)aminocarbonyl, $C_1$-$C_{12}$-alkylamino, N,N-di-($C_1$-$C_{12}$-alkyl)amino, sulfamoyl, N-($C_1$-$C_{12}$-alkyl)aminosulfonyl, N,N-di-($C_1$-$C_{12}$-alkyl)aminosulfonyl, halogen, nitro, cyano, trifluoromethyl, carboxyl, sulfo, $C_1$-$C_{12}$-alkylthio, $C_2$-$C_{25}$-alkanoyl and hydroxyl and

$A^2$ stands for a radical of the formula Ar-W- where W is a direct bond or a divalent group of the formula -S-, -O-, -CO-, -CO-O-, -O-CO-, -CO-NH-, -NH-CO-, -SO-, - $SO_2$-, -$SO_2$NH-, -$NHSO_2$-, -$CH_2$-, -CH($CH_3$)-, -C($CH_3$)$_2$-, -NR'- where R' denotes hydrogen or $C_1$-$C_6$-alkyl, or is -N=N- or a combination of at least two of the foregoing divalent groups and
Ar denotes the radical of a carbocyclic or heterocyclic aromatic system comprising one or two rings, which aromatic system may additionally have 1-3 of the above-defined substituents $A^1$.

**4.** A compound as claimed in at least one of claims 1 to 3, wherein $D^1$ and $D^2$ are each independently of the other aryl or hetaryl from the following group:
phenyl, phenyl having 1-3 substituents, naphthyl, naphthyl having 1-3 substituents, a radical of an anthraquinone or fluorene with 1-3 substituents and a radical of a heterocyclic system comprising 1 to 5 five- or six-membered rings which each may have 1-3 substituents, the substituents on the substituted aryl radicals or hetaryl radicals each having the meaning $A^1$ or $A^2$ where
$A^1$ stands for a radical from the group consisting of $C_1$-$C_4$-alkyl, $C_1$-$C_4$-alkoxy, $C_1$-$C_4$-alkoxycarbonyl, $C_2$-$C_5$-alkanoyloxy, $C_2$-$C_5$-alkanoylamino, carbamoyl, N-($C_1$-$C_4$-alkyl)aminocarbonyl, N,N-di-($C_1$-$C_4$-alkyl)aminocarbonyl, sulfamoyl, N-($C_1$-$C_4$-alkyl)- and N,N-di($C_1$-$C_4$-alkyl)aminosulfonyl, chlorine, bromine, nitro, trifluoromethyl, ethylsulfonyl, carboxyl, sulfo and cyano and
$A^2$ stands for a radical of the formula Ar-W- where W is a divalent group of the formula -O-, -CO-O-, -O-CO-, -CO-NH-, -NH-CO-, -$SO_2$-, -$SO_2$NH-, -$NHSO_2$-, -$CH_2$-, -NH- or -N=H- or is a combination of two of the divalent groups mentioned and
Ar denotes phenyl, naphthyl or phenyl with a fused-on five- or six-membered heterocyclic ring containing one or two heteroatoms or one of the foregoing radicals Ar which additionally has 1 to 3 substituents $A^1$ of the above-defined meaning.

**5.** A compound as claimed in at least one of claims 1 to 4, wherein $D^1$ and $D^2$ are each independently of the other aryl or hetaryl from the following group:
phenyl, naphthyl, anthraquinone, fluorene, benzimidazole, benzimidazol-2-one, phthalimide, quinazoline, quinazolin-4-one, carbazole, benzothiazole, quinazoline-2,4-dione, indole, isoindole, quinoline, indazole, quinolin-2-one, benzimidazo[1,2-a]pyrimid-2-one, benzothiazol-2-one, benzo[e][1,3]oxazine-2,4-dione, benzo[e][1,4]oxazin-3-one, benzotriazole, benzoxazol-2-one, benzimidazole-2-thione, benzo[cd]indol-2-one, benzo[de]isoquinoline-1,3-dione (naphthalimide), 1,2,4-thiadiazole, 1,3,4-thiadiazole, thiazole, isothiazole, thiophene, dibenzo[a,c]phenazine, isoquinoline, quinoxaline, quinoxaline-2,3-dione, cinnoline and phthalazine, which each may have 1-3 substituents.

**6.** A process for preparing a compound of the idealized general formula (I) defined as claimed in at least one of claims 1 to 5, which comprises diazotizing one or more amines of the formula $D-NH_2$ where D has the meaning $D^1$ or $D^2$ as per the formula (I) and coupling with 0.5 mole of 1,5-diazabicyclo[3.3.0]-octane-2,4,6,8-tetrone per mole of total reacting diazonium salts.

**7.** The process as claimed in claim 6, wherein the coupling is carried out in the presence of at least one nonionic, anionic or cationic surface active substance or of a natural or synthetic resin or resin derivative or of a paint, printing ink or plastics additive.

**8.** The process as claimed in claim 6 or 7, wherein a coupling product having one or more lakable groups is converted with metal ions into color lakes.

**9.** The use of a compound of the idealized general formula (I) defined as claimed in at least one of claims 1 to 5, for coloring natural and synthetic materials.

**10.** The use as claimed in claim 9 for coloring or pigmenting polystyrene, polyolefins, polyacrylic compounds, polyvinyl compounds, polyesters, rubber, casein resins, silicon resins, filaments made of viscose, cellulose ethers, cellulose esters, polyamides, polyurethanes or polyglycol terephthalates or paper or for preparing printing inks and varnish or emulsion paints or for printing substrates or sheetlike structures.

**11.** A compound as claimed in at least one of claims 1 to 5, wherein $D^1$ and $D^2$ have the same meaning.

**Revendications**

**1.** Composé de formule générale idéalisée I ci-dessous :

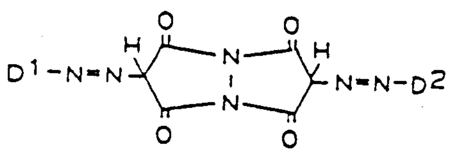

(I)

dans laquelle $D^1$ et $D^2$ représentent chacun, indépendamment l'un de l'autre, un radical aryle ou hétéroaryle avec ou sans substituants, les substituants éventuels, qui seront désignés par $A^1$ et $A^2$, étant les suivants :
$A^1$ est un radical pris parmi des groupes saturés ou insaturés, linéaires ou ramifiés, $C_1$-$C_{24}$-alkyles, $C_1$-$C_{24}$-alcoxy, $C_1$-$C_{24}$-hydroxyalkyles, $C_5$-$C_{10}$-cycloalkyles, $C_1$-$C_{24}$-alcoxycarbonyles, $C_2$-$C_{25}$-alcanoyloxy, $C_2$-$C_{25}$-alcanoylamino, $C_1$-$C_{24}$-alkylsulfonyles, carbamoyle, N-($C_1$-$C_{12}$-alkyl)-aminocarbonyles, N,N-di-($C_1$-$C_{12}$-alkyl)-aminocarbonyles, $C_1$-$C_{12}$-alkylamino, N,N-di-($C_1$-$C_{12}$-alkyl)-amino, sulfamoyle, N-($C_1$-$C_{12}$-alkyl)-aminosulfonyles et N,N-di-($C_1$-$C_{12}$-alkyl)-aminosulfonyles, des halogènes et les groupes nitro, cyano, trifluorométhyle, carboxy, sulfo, alkylthio, $C_1$-$C_{12}$-alkylthio, $C_2$-$C_{25}$-alcanoyles et hydroxy, et
$A^2$ est un radical Ar-W-, W représentant une liaison directe ou un radical divalent -S-, -O-, -CO-, -CO-O-, -O-CO-, -CO-NH-, -NH-CO-, -SO-, $-SO_2-$, $-SO_2NH-$, $-NHSO_2-$, $-CH_2-$, $-CH(CH_3)-$, $-C(CH_3)_2-$, -NR'-, R' étant l'hydrogène ou un alkyle en $C_1$-$C_6$, ou -N=N-, ou plusieurs de tels radicaux divalents à la fois, et Ar représentant le radical d'un système aromatique carbocyclique ou hétérocyclique à un ou deux cycles, qui peut avoir de un à trois des substituants $A^1$ ci-dessus définis.

**2.** Composé selon la revendication 1, caractérisé en ce que $D^1$ et $D^2$ représentent chacun le radical d'un composé aromatique de la série du benzène, du naphtalène, du fluorène ou de l'anthraquinone ou de la série hétérocyclique.

**3.** Composé selon la revendication 1 ou 2, caractérisé en ce que $D^1$ et $D^2$ représentent chacun un radical

aryle ou hétéro-aryle avec ou sans substituants pris parmi les suivants : phényle, phényle avec de un à trois substituants, naphtyle, naphtyle avec de un à quatre substituants, le radical d'une anthraquinone ou d'un fluorène pouvant avoir jusqu'à quatre substituants et le radical d'un système hétérocyclique comportant de 1 à 5 cycles pentagonaux ou hexagonaux et pouvant avoir jusqu'à quatre substituants, les substituants étant toujours des substituants $A^1$ ou $A^2$ tels que définis,
$A^1$ étant un groupe saturé ou insaturé, linéaire ou ramifié, $C_1$-$C_{24}$-alkyle, $C_1$-$C_{24}$-alcoxy, $C_1$-$C_{24}$-hydroxyalkyle, $C_5$-$C_{10}$-cycloalkyle, $C_1$-$C_{24}$-alcoxycarbonyle, $C_2$-$C_{25}$-alcanoyloxy, $C_2$-$C_{25}$-alcanoylamino, $C_1$-$C_{24}$-alkylsulfonyle, carbamoyle, N-($C_1$-$C_{12}$-alkyl)-aminocarbonyle, N,N-di-($C_1$-$C_{12}$-alkyl)-aminocarbonyle, $C_1$-$C_{12}$-alkylamino, N,N-di-($C_1$-$C_{12}$-alkyl)-amino, sulfamoyle, N-($C_1$-$C_{12}$-alkyl)-aminosulfonyle, N,N-di-($C_1$-$C_{12}$-alkyl)-aminosulfonyle, un halogène ou un groupe nitro, cyano, trifluorométhyle, carboxy, sulfo, $C_1$-$C_{12}$-alkylthio, $C_2$-$C_{25}$-alcanoyle ou hydroxy, et
$A^2$ étant un radical Ar-W-, W représentant une liaison directe ou un radical divalent -S-, -O-, -CO-, -CO-O-, -O-CO-, -CO-NH-, -NH-CO-, -SO-, $-SO_2-$, $-SO_2NH-$, $-NHSO_2-$, $-CH_2-$, $-CH(CH_3)-$, $-C(CH_3)_2-$, -NR'-, R' désignant l'hydrogène ou un alkyle en $C_1$-$C_6$, ou -N=N-, ou encore plusieurs de ces radicaux divalents à la fois, et
Ar le radical d'un système aromatique carbocyclique ou hétérocyclique à un ou deux cycles, pouvant en outre comporter de un à trois des substituants $A^1$ précédemment définis.

**4.** Composé selon une ou plusieurs des revendications 1 à 3, caractérisé en ce que $D^1$ et $D^2$ sont chacun un radical aryle ou hétéro-aryle pris parmi les suivants : phényle, phényle avec de un à trois substituants, naphtyle, naphtyle avec de un à trois substituants, le radical d'une anthraquinone ou d'un fluorène avec de un à trois substituants et le radical d'un système hétérocyclique comportant de 1 à 5 cycles pentagonaux ou hexagonaux pouvant avoir de un à trois substituants, les substituants des radicaux aryles ou hétéro-aryles substitués étant toujours des substituants $A^1$ ou $A^2$,
$A^1$ étant un groupe $C_1$-$C_4$-alkyle, $C_1$-$C_4$-alcoxy, $C_1$-$C_4$-alcoxycarbonyle, $C_2$-$C_5$-alcanoyloxy, $C_2$-$C_5$-alcanoylamino, carbamoyle, N-($C_1$-$C_4$-alkyl)-aminocarbonyle, N,N-di-($C_1$-$C_4$-alkyl)-aminocarbonyle, sulfamoyle, N-($C_1$-$C_4$-alkyl)- ou N,N-di-($C_1$-$C_4$-alkyl)-aminosulfonyle, un atome de chlore ou de brome ou un groupe nitro, trifluorométhyle, éthylsulfonyle, carboxy, sulfo ou cyano, et
$A^2$ étant un radical Ar-W-, W représentant un radical divalent -O-, -CO-O-, -O-CO-, -CO-NH-, -NH-CO-, $-SO_2-$, $-SO_2NH-$, $-NHSO_2-$, $-CH_2-$, -NH- ou -N=N-, ou une association de deux de ces radicaux divalents, et
Ar un phényle, un naphtyle ou un phényle avec un hétérocycle condensé pentagonal ou hexagonal ayant un ou deux hétéro-atomes, ou bien l'un des radicaux Ar précédents avec en outre de 1 à 3 substituants $A^1$ tels que définis ci-dessus.

**5.** Composé selon une ou plusieurs des revendications 1 à 4, caractérisé en ce que $D^1$ et $D^2$ sont chacun un radical aryle ou hétéro-aryle pris parmi les suivants : phényle, naphtyle, d'anthraquinone, de fluorène, benzimidazole, benzimidazol-2-one, phtalimide, quinazoline, quinazoline-4-one, carbazole, benzothiazole, quinazoline-2,4-dione, indole, isoindole, quinoléine, indazole, quinoléine-2-one, benzimidazo[1,2-a]pyrimide-2-one, benzothiazol-2-one, benzo[e][1,3]oxazine-2,4-dione, benzo[e][1,4]-oxazine-3-one, benzotriazole, benzoxazol-2-one, benzimidazol-2-thione, benzo[cd]indol-2-one, benzo-[de]isoquinoléine-1,3-dione (naphtalimide), 1,2,4-thiadiazole, 1,3,4-thiadiazole, thiazole, isothiazole, thiophène, dibenzo[a,c]phénazine, isoquinoléine, quinoxaline, quinoxaline-2,3-dione, cinnoline et phtalazine, pouvant avoir chacun de un à trois substituants.

**6.** Procédé de préparation d'un composé de formule I selon les revendications 1 à 5, procédé caractérisé en ce que l'on diazote une ou plusieurs amines $D-NH_2$, D ayant la signification de $D^1$ ou $D^2$ de la formule I, puis on copule avec 0,5 mol de 1,5-diazabicyclo[3.3.0]octane-2,4,6,8-tétrone par mole de l'ensemble des sels de diazonium.

**7.** Procédé selon la revendication 6, caractérisé en ce que l'on effectue la copulation en présence d'un ou plusieurs agents surfactifs non-ionogènes, anioniques ou cationiques ou d'une résine naturelle ou synthétique ou d'un dérivé de résine ou encore d'un additif de vernis, encres d'impression ou matières plastiques.

**8.** Procédé selon la revendication 6 ou 7, caractérisé en ce que l'on transforme en sels de colorants, avec des ions de métaux, des produits de la copulation ayant un ou plusieurs groupes salifiables.

**9.** L'emploi d'un composé des revendications 1 à 5 pour colorer des matières naturelles ou synthétiques.

**10.** Emploi selon la revendication 9 pour colorer ou pigmenter du polystyrène, des polyoléfines, des composés polyacryliques ou polyvinyliques, des polyesters, caoutchoucs, résines de caséine ou de silicones, soie artificielle de viscose, éthers et esters de cellulose, polyamides, polyuréthannes et téréphtalates de polyglycols ou du papier, ou encore pour préparer des encres d'impression ou des couleurs de vernis ou peintures en dispersions, ou pour l'impression sur substrats ou articles plats.

**11.** Composé selon une ou plusieurs des revendications 1 à 5, caractérisé en ce que $D^1$ et $D^2$ sont identiques.